Europäisches Patentamt

European Patent Office

Office européen des brevets

(11) Publication number: **0 213 504**
**A2**

## EUROPEAN PATENT APPLICATION

(21) Application number: **86111262.1**

(22) Date of filing: **14.08.86**

(51) Int. Cl.⁴: **G01M 1/02**

(30) Priority: **15.08.85 US 765985**

(43) Date of publication of application:
**11.03.87 Bulletin 87/11**

(84) Designated Contracting States:
**DE FR GB IT**

(71) Applicant: **Rockwell International Corporation**
**600 Grant Street**
**Pittsburgh Pennsylvania 15219(US)**

(72) Inventor: **Nugier, John G.**
**Route 1, Box 658C**
**Burns, Tennessee 37029(US)**

(74) Representative: **Leiser, Gottfried, Dipl.-Ing. et al**
**Patentanwälte Prinz, Leiser, Bunke & Partner**
**Manzingerweg 7**
**D-8000 München 60(DE)**

(54) Two jaw chuck and recessed jaw element.

(57) A jaw element and chuck assembly for mounting and rotating the opposed journals of a plurality of universal crosses of different sizes. The jaw element has an article receiving recess at one end. The recess has a circular mouth opening and an interior uniformly converging article engaging surface in the form of a truncated conical surface having a slope of 45°.

FIG. 5

## TWO JAW CHUCK AND RECESSED JAW ELEMENT

### Background of the Invention

*Field of the Invention.* The present invention is directed to apparatus useful in the manufacture and repair of tubular products and, more specifically, to a two jaw chuck and recessed jaw element for mounting and rotating the opposed journals of a plurality of universal crosses of different sizes.

Automotive drive shafts sometimes referred to as drive lines are comprised of a tubular member having an element such as a yoke of a universal joint, a bearing stub or one component of a slip joint fitted and welded at each end thereof.

In automotive applications, drive shafts are utilized, either singularly or in combination, as a torque transmitting component(s) of the power train and are most commonly located under the vehicle between the transmission or other gear box and the differential of a drive axle. The ends of the drive shaft are usually connected to other components of the power train by a yoke which is fitted to one end of the drive shaft and connected by means of a universal joint cross shaped journal to another yoke receiving or delivering torque from or to an adjacent component of the power train.

Torque transmitting drive shafts of this type, especially when employed on commercial vehicles and heavy duty trucks, are subject to sudden changes in torque and exposed to road hazards which, during the life of the vehicle, may cause wear or damage to the drive shaft. In the event of such wear or damage, the drive shaft may be removed and replaced in its entirely which is rather expensive. Depending upon the nature of the wear and/or damage incurred, the drive shafts may also be disassembled and repaired which is less expensive than replacing the unit, however, this option depends upon the availability of equipment necessary to disassemble and reassemble the drive shaft assembly and to balance the reassembled drive shaft and thereby avoid undesirable vibration and wear.

*Description of the Prior Art.* Various types of machinery and equipment have been employed to support drive shafts in the past. Most of these are relatively long machines having spaced spindles adapted to engage and rotate the opposite ends of a drive shaft and in balancing machine sensors or other devices are also provided for detecting and indicating vibration(s) induced by the rapidly rotating driveshaft. Some machines have utilized support devices which require as many as 25 different fixtures and fittings for supporting and rotating the opposite ends of a drive shaft.

The present invention provides a two jaw chuck and recessed jaw element which accommodates a plurality of different sized universal joint journals and permits rapid mounting of a plurality of different sized drive shafts for rotation and the performance of work thereon. The jaw element and chuck assembly is useful in a dynamic balancing machine and may also support and rotate the drive shaft for welding and straightening operations.

### Summary of the Invention

The present invention provides a jaw element adapted to receive one of a plurality of substantially cylindrical journals of different sizes comprising: a body having an article receiving recess at one end thereof, the recess has a circular mouth and an interior uniformly converging article engaging surface and means for mounting the body to a chuck.

In the preferred embodiment, the recess is in the form of a truncated conical surface with the circular mouth constituting the base of the truncated conical surface, the slope of the conical surface is 45° and a shank coaxial with and extending from the other end of the body is provided for mounting the jaw element to a chuck assembly.

A two jaw chuck for coaxially mounting and rotating oppositely disposed ends of a plurality of universal joint crosses of different sizes comprising: a support, a spindle mounted to the support, a shaft rotatably mounted to thed spindle, a bracket secured for rotation with the spindle shaft, and comprising a radially extending body mounting a pair of jaw elements for reciprocating movement on the radially extending body with each said jaw element comprising an elongate member having an article receiving recess at one end thereof adapted to receive one of a pair of coaxially aligned cylindrical members. each recess has an interior axially converging article engaging surface. and means for moving the jaw elements toward one another to engage the oppositely disposed ends of the cylindrical members.

These and other features and advantages of the invention will become apparent from the following detailed description of the embodiment shown by the accompanying drawings.

## Brief Description of the Drawings

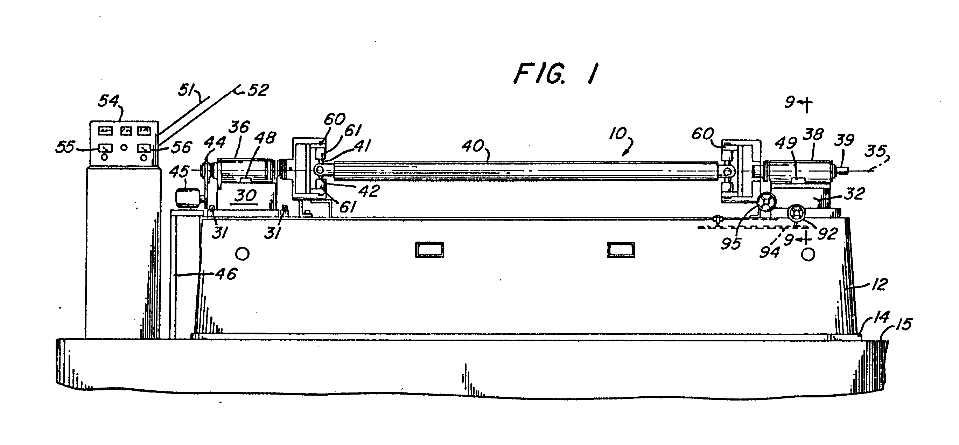

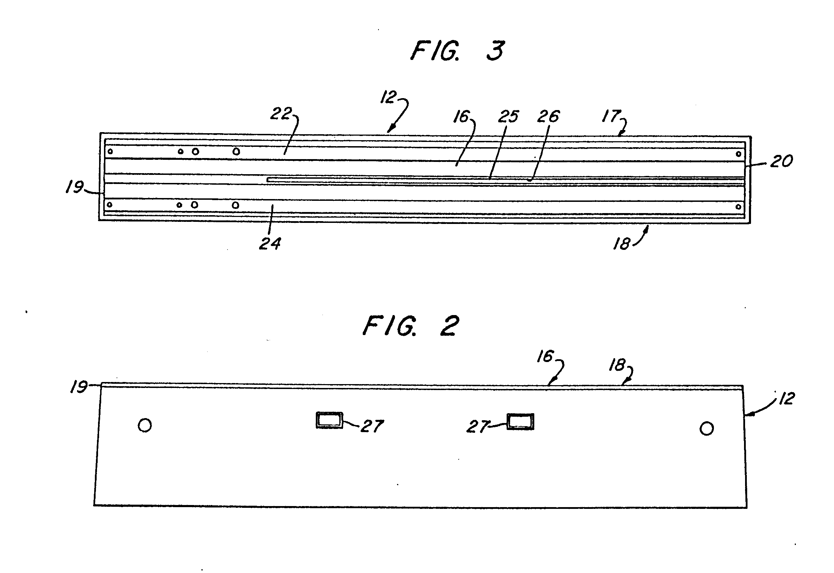

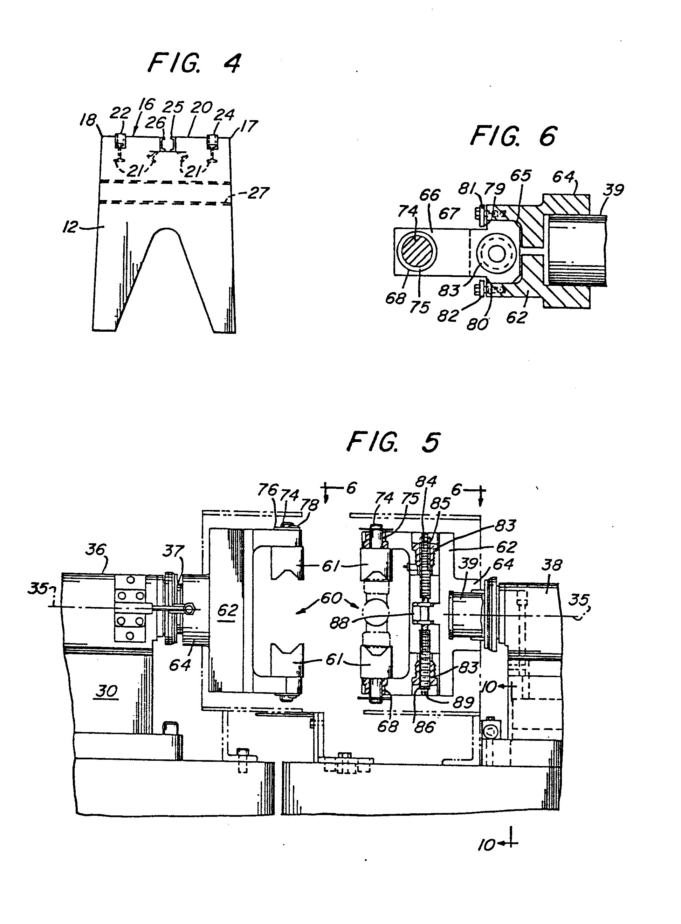

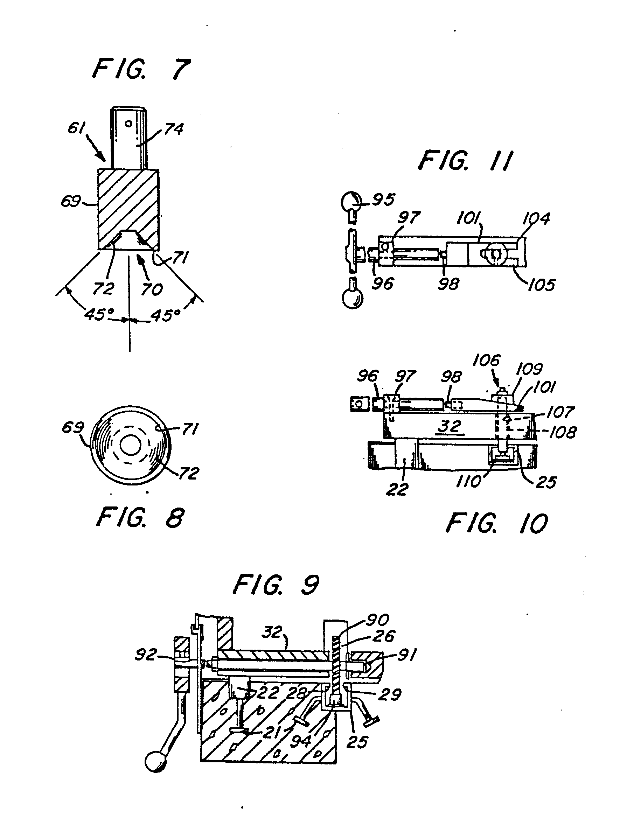

In the drawings, wherein like reference numerals refer to like parts, Figure 1 is a front view showing the dynamic balancing machine of the present invention; Figure 2 is a front elevation of the cast concrete base of the machine; Figure 3 is a plan view of the case concrete base of the machine; Figure 4 is a side elevation of the case concrete base of the machine as viewed from the right side of Figure 2; Figure 5 is an enlarged view, partly in section showing the spindles and associates chucks of the balancing machine; Figure 6 is a view taken along the lines 6-6 of Figure 5; Figure 7 is a view partly in section showing details of one of the jaw elements of the two-jaw chucks associated with each of the spindles of Figure 5; Figure 8 is a view looking into the recessed aperture of the jaw element of Figure 7; Figure 9 taken along section 9-9 of Figure 1; Figure 10 is a view taken along line 10-10 of Figure 5; and Figure 11 is a plan view apparatus shown by Figure 10.

## Description of the Preferred Embodiment

With reference to the drawings, Figure 1 shows a dynamic balancing machine generally denoted by the reference numeral 10 which includes a cast concrete base 12. The cast concrete base 12 is set on a previously prepared footer or foundation pad 14 provided on the machine floor 15. The upper surface of the foundation pad 14 provides a level surface for the dynamic balancing machine 10. The cast concrete base 12 provides an elongate horizontal bed 16 bounded by longitudinally extending edges 17 and 18 and spaced ends 19 and 20.

A pair of rails 22 and 24 are cast integrally with the concrete base and extend substantially the entire length of the support bed 16 parallel to the longitudinal edges 17 and 18. A rectangular metal tube 25 is also cast integral with the support bed 16. The rectangular metal tube 25 also extends substantially the entire length of the support bed 16 and is parallel to the longitudinal edges 17 and 18. The exposed outer wall of the rectangular metal tube is slotted at 26 along a substantial length of the tube 25 for purposes which will be described more fully hereinbelow.

The rails 22 and 24 and the rectangular metal tube 25 are each provided with a plurality of anchors 21 secured by welding at various locations along the length of the rails and tube which extend into and firmly secure the rails 22 and 24 and the rectangular metal tube 25 to the surrounding concrete mass.

A pair of 3" x 6" rectangular steel tubes 27 are also cast in the concrete base to provide lateral support for means such as the fork of a lift truck or crane utilized to move or maneuver the concrete base 12.

A mounting block 30 is secured by means of machine screws 31 to the rails 22 and 24 adjacent the end 19 of the horizontal support bed 16. A second mounting block 32 located adjacent the end 20 of the support bed 16 is slidable along the rails 22 and 24 toward and away from the fixed mounting 31. The mounting block 30 and 32 provide support for spindles 36 and 38 which are rigidly secured to the mounting blocks 30 and 32. The spindles 36 and 48 respectively rotatably mount shafts 37 and 39 for rotation about a common horizontal axis 35. The spindle shafts 37 and 39 each respectively mount a two-jaw chuck assembly 50 especially adapted for engaging the oppositely disposed journal end of a universal joint cross provided at each end of an elongate tubular element such as a drive shaft 40 for rapid rotation and detection of any imbalance therein.

One end of the shaft 37 of spindle 36 is provided with a belt driven sheave 44 driven by a motor mounted to a support 46 provided to the rear of the left end of the dynamic balancing machine 10 as shown by Figure 1. Vibration sensing elements 48 and 49 respectively provided to the spindles 36 and 38 emit electrical signals which are respectively carried by lead wires 51 and 52 to visual indicating devices 55 and 56 provided to a console 54 located adjacent the motor 45. During operations of the machine 10, the sensors 48 and 49 simultaneously detect vibrations induced by imbalance of the drive shaft 40 at the spindles 36 and 38, i.e., at each end of the drive shaft 40 and transmit electrical pulses along the wires 51 and 52 to simultaneously provide a visual indication of such imbalance at the indicating devices 55 and 56.

The two jaw chuck assemblies 60 each comprise a pair of jaw elements mounted for reciprocating or sliding movement on a bracket 62 having a hub 64 secured for rotation with the spindle shaft 37 or 39.

The jaw elements 61 are each carried by a sliding nut 66 for reciprocating movement on the radially extending brackets 62.

Each jaw element 61, as shown by Figures 7 and 8, is comprised of a cylindrical body 69 having an article receiving recess 70 at one end thereof and a shank 74 coaxial with and extending from the other end of the cylindrical body portion 69. The recess 70 of each jaw elements 61 has a circular opening or mouth 71 and an interior uniformly converging article engaging surface 72. The jaw elements 61 are preferably formed having a recess mouth opening 71 of 1 ½ inch in diameter and an interior converging article engaging surface 72 in the form of a frusto-conical surface having a slope of 45°. The article engaging the surface 72 of the recess 70 thus converges to a diameter of approximately ½ inch, ½ inch in from the circular mouth opening 71. The article engaging recess surface 72 is thus adapted to receive the cylindrical end of universal joint cross journals having a diameter ranging from ¼" up to 1 ¼". Vertical spacing of the jaw elements 61 in each chuck assembly 60 can be adjusted to accommodate different lengths between the ends of such universal cross journals within the limits of the mechanism to be described hereinbelow. Additional jaw elements identical to the jaw elements 61 being of slightly different length may also be utilized in the two jaw chuck assemblies. It has been found that two sets of jaw elements 61 having cylindrical body lengths of 2 ½" and 4" will accommodate substantially all universal joint cross configurations encountered during normal repair and rebuilding service.

The shank 74 of each jaw element 61 is positioned in a bushing 75 seated in a bore 68 provided at one end of the sliding nut 66. The end of the shank 64 is secured by means of a washer 76 and cotter key 78. The other end of the sliding nut 66 is disposed for radially reciprocating movement in a way 65 provided to the radially extending bracket 62. The sliding nut 66 is provided with a pair of shoulders 79 and 80 retained within the way 65 by means of a pair of elongate retaining plates 81 and 82 bolted to the bracket 62. Each of the sliding nuts 66 are bored and countersunk at 67 and receive a threaded nut 83. The two nuts of each chuck assembly 60 are engaged with a shaft 84 rotatably journaled in a bushing 88. The shaft 84 is oppositely threaded at its respective ends 85 and 86 and one end of the shaft is provided with a square head 89. The shaft 84 may thus be rotated by means of a wrench engaging the square head 89. Clockwise rotation of the shaft 84 will cause the oppositely disposed nuts to move toward the bushing 88 and bring the jaw elements 61 closer to the horizontal axis 35. Counter clockwise rotation of the shaft 84 will move the threaded nut 83 and their associated jaw elements 61 away from the horizontal axis 35.

The mounting block 32 may be moved toward and away from the fixed mounting block 30 to accommodate drive shafts of different axial lengths. A gear and rack mechanism are provided to accommodate such movement. A spur gear 90 is fixed to a shaft 91 journaled in the base of the second mounting block 32. The hand wheel 92 is fixed to an extending end of shaft 91 and provides means for rotating the spur gear 90. A rack 94 is secured to the internal wall of the rectangular metal tube 25 opposite from the slot 26. The slot 26 permits entry of a segment of the spur gear 90 and the teeth of the spur gear 90 engage the teeth provided to the rack 94. Rotation of the hand wheel 92 permits movement of the second mounting block 32 and the spindle 38 carried thereby along a substantial length as indicated by the length of the slot 26 provided to the rectangular metal tube 25 as shown by Figure 3.

The second mounting block 32 may also be locked in a selected location along the rails 22 and 24 by actuation of a second hand wheel 95. The hand wheel 95 is secured to a shaft 96 mounted for rotation in a bushing 77 and having a power screw 98 secured at the end thereof. The power screw 98 is internally threaded to a sliding wedge 101. The sliding wedge 101 is bifurcated at 104 and 105 to raise and lower a locking shaft assembly 106. The locking shaft assembly 106 is comprised of a shaft 108 passing through a vertical bore 107 provided to the second mounting block 32 and having a wedge shaped nut 109 at one end thereof and a stepped bushing 110 located internally of the rectangular metal tube 25. The shaft 108 passes through the slot 26 provided to the rectangular metal tube 25 and the stepped bushing is of sufficient width at the upper surfaces thereof are adapted to engage the shoulders 28 and 29 provided adjacent the slot 26 when the locking shaft assembly 106 is raised by rotating the handwheel 96 and power screw 98 to advance the bifurcated sliding wedge 101 thereby raising the wedge shaped nut 109 and the shaft assembly 106 and the stepped bushing 110 into abutment with the metal tube shoulders 28 and 29. The locking assembly is released by rotating the handwheel 95 in the opposite direction to withdraw the bifurcated sliding wedge 101.

The invention may also be embodied in other specific forms without departing from the spirit or essential characteristics thereof. The foregoing description is therefore to be considered as illustrative and not restrictive, the scope of the invention being defined by the appended claims, and all changes which come within the meaning and range of equivalency of the claims are therefore intended to be embraced thereby.

## Claims

1. A jaw element adapted to receive one of a plurality of substantially cylindrical journals of different sizes comprising: a body having an article receiving recess at one end thereof, said recess having a circular mouth and an interior uniformly converging article engaging surface, and

means for mounting said body to a chuck.

2. The jaw element defined by claim 1 wherein said interior uniformly converging article engaging surface is a truncated conical surface.

3. The jaw element defined by claim 1 wherein said recess is in the form of a truncated conical surface with said circular mouth constituting the base of said truncated conical surface and the slope of said conical surface is 45°.

4. The jaw element defined by claim 1 wherein said body is cylindrical in form, said recess is provided to one axial end of said cylindrical body and said mounting means is a shank coaxial with and extending from the other axial end of said cylindrical body.

5. A two jaw chuck for coaxially mounting and rotating oppositely disposed ends of a plurality of universal joint crosses of different sizes comprising:

a support,

a spindle mounted to said support,

a shaft rotatably mounted to said spindle,

a bracket secured for rotation with said spindle shaft, said bracket comprising a radially extending body secured to said spindle shaft, and mounting a pair of jaw elements for reciprocating movement on said radially extending body each said jaw element comprising an elongate member having an article receiving recess at one end thereof adapted to receive one of a pair of coaxially aligned cylindrical members,

each said recess having an interior axially converging article engaging surface, and means for moving said jaw elements toward one another to engage the oppositely disposed ends of said cylindrical members.

FIG. I

FIG. 3

FIG. 2

0 213 504

## FIG. 4

## FIG. 6

## FIG. 5

FIG. 7

FIG. 11

FIG. 8

FIG. 10

FIG. 9